# EUROPÄISCHE PATENTSCHRIFT

(11) **EP 1 407 154 B1**
(45) Veröffentlichungstag und Bekanntmachung des Hinweises auf die Patenterteilung: **31.08.2005**
(21) Anmeldenummer: 02754582.1
(22) Anmeldetag: 24.05.2002
(51) Int. Cl.: F16C 11/06

(54) **KUGELZAPFGELENK**
BALL JOINT
ARTICULATION A ROTULE

(30) Priorität: 13.07.2001 DE 10134106
(43) Veröffentlichungstag der Anmeldung: 14.04.2004
(73) Patentinhaber: AUDI AG, 85045 Ingolstadt (DE)
(72) Erfinder: ZÜGE, Frank, 85110 Schelldorf (DE); FUCHS, Matthias, 85080 Gaimersheim (DE); LEITNER, Wilfried, 85072 Eichstätt (DE); HAMMER, Bernhard, 91790 Nennslingen (DE)
(86) Internationale Anmeldenummer: PCT/EP2002/005694
(87) Internationale Veröffentlichungsnummer: WO 2003/008820

(56) Entgegenhaltungen:
- EP-A- 0 206 131
- DE-C- 729 577
- FR-A- 2 634 529
- US-A- 4 911 483

## Beschreibung

Die Erfindung betrifft ein Kugelzapfgelenk, insbesondere für Radaufhängungen von Kraftfahrzeugen, gemäß dem Oberbegriff des Patentanspruches 1.

Ein solches Kugelzapfgelenk zeigt beispielsweise die DE 42 07 602 A1. Derartige Gelenke, die um die Zapfenmittelachse verdrehbar und mit begrenztem Schwenkwinkel verschwenkbar sind, werden häufig als Traggelenke in Radaufhängungen von Kraftfahrzeugen verwendet. Neben der Funktionssicherheit und Leichtgängigkeit sollten solche Kugelzapfgelenke auch eine definierte Dämpfungsfunktion zur Unterdrückung von Schwingungen aufweisen.

Aufgabe der Erfindung ist es, ein gattungsgemäßes Kugelzapfgelenk vorzuschlagen, welches baulich und herstellungstechnisch günstig ist und eine definierte Dämpfungsfunktion aufweist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, um die Zapfen benachbart dem Kugelabschnitt Ringspalte auszubilden, die mit einem Dämpfungsfluid mittel- oder unmittelbar befüllt sind. Das Dämpfungsfluid - bevorzugt ein zähviskoses - bewirkt einerseits eine nahezu verschleißfreie und leichtgängige Funktion des Kugelzapfgelenks und dämpft zugleich wirkungsvoll Schwingungen um den Kugelmittelpunkt in einem definierten Frequenzbereich - insbesondere bei seinem Einsatz als Traglager in Radaufhängungen von Kraftfahrzeugen. Das Dämpfungsfluid kann elektrorheologische oder magnetorhelogische Eigenschaften besitzen.

In baulich günstiger Weise können die Ringspalte im wesentlichen durch ringförmige Fortsätze an dem den Kugelabschnitt umfassenden Lagerring begrenzt sein. Dabei sollte bevorzugt die Länge der Ringspalte zumindest um den Faktor 3 größer als deren Breite sein, um eine ausreichende Dämpfungsfunktion sicherzustellen. Zudem können bevorzugt die Ringspalte zwischen konischen Zapfenabschnitten und korrespondierend dazu ausgebildeten Fortsätzen am Lagerring gebildet sein, woraus eine robuste Konstruktion des Zapfens und eine baulich günstigere Abdichtung zwischen den Zapfenenden und dem äußeren, zylindrischen Gehäuse des Kugelzapfgelenks resultiert.

Alternativ zu einer unmittelbaren Einbringung des Dämpfungsfluids in die Ringspalte wird eine mittelbare Anordnung vorgeschlagen, bei der in den Ringspalten mit Dämpfungsfluid gefüllte ringförmige Schläuche verwendet sind. Durch die Gestaltung der ringförmigen Schläuche (z. B. mit Gewebeverstärkungen) und durch die funktionelle Trennung der Gelenkschmierung (z. B. mit Fett) und des Dämpfungsmittels können ebenfalls definierte Dämpfungseigenschaften des Kugelzapfgelenks geschaffen werden.

Die ringförmigen Schläuche können dabei in prismaförmigen Führungsringen des zylindrischen Gehäuses aufgenommen und an im Bereich der Schläuche sphärisch ausgebildeten Ringbunden der Zapfenabschnitte anlaufen. Dadurch ergibt sich im wesentlichen bei unbelastetem Kugelzapfgelenk eine Linienberührung zwischen den Zapfenabschnitten und den Schläuchen, die die Leichtgängigkeit des Kugelzapfgelenks nicht beeinträchtigt und ebenfalls ein definiertes Dämpfungsverhalten sicherstellt.

Mit dem Einsatz eines Dämpfungsfluids mit elektrorheologischen oder magnetorheloligschen Eigenschaften wird es möglich eine kontinuierliche veränderbare Dämpfungs-Kennlinie zu ralisieren.

Damit wird es möglich, ein Kugelzapfgelenk mit steuerbarer Torsionsdämpfung (fahrmanöverabhängige Änderung der Dämpfungseigenschaft) zu gestalten, welches beispielsweise zur Reduzierung von Schwingungsproblemen an Mehrlenkerachsen anwendbar ist.

Ein rheologisch wirkendes Dämpfungsfluid hat den Vorteil eines schnellen Ansprechverhaltens (Dämpfungsregelung nahezu in Echtzeit, dadurch Bedämpfung auch im Bereich der Radeigenfrequenz möglich). Mittels einer Steuereinrichtung kann die Dämpfungscharakteristik des rheologischen Fluids verändert und somit die Dämpfungscharakteristik eines Kugelzapfgelenkes gesteuert werden.

Zwei Ausführungsbeispiele der Erfindung sind im folgenden mit weiteren Einzelheiten näher erläutert. Die schematische Zeichnung zeigt in
- Fig. 1: einen Längsschnitt durch ein Kugelzapfgelenk für Radaufhängungen von Kraftfahrzeugen mit beiderseits des Kugelabschnittes definierten Ringspalten, die mit einem Dämpfungsfluid befüllt sind; und
- Fig. 2: einen weiteren Längsschnitt eines Kugelzapfgelenks mit in Ringspalten beiderseits des Kugelabschnittes angeordneten, mit einem Dämpfungsfluid befüllten Schläuchen.

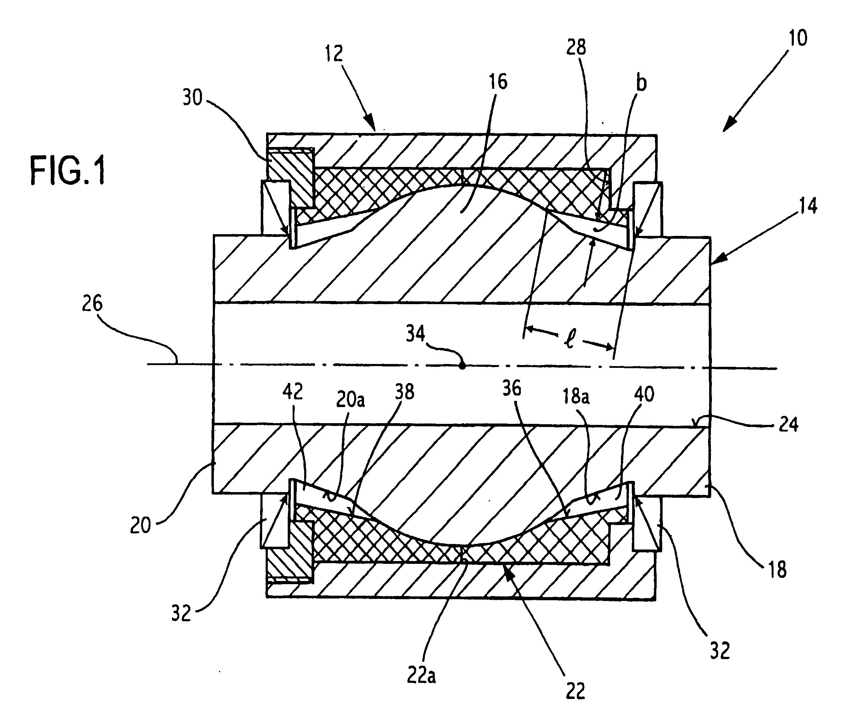

In der Fig. 1 ist mit 10 ein Kugelzapfgelenk bezeichnet, das sich im wesentlichen aus einem äußeren, zylindrischen Gehäuse 12, einem inneren rotationssymmetrischen Gelenkteil 14 mit einem einen Kugelabschnitt 16 tragenden Zapfen 18,20 und einen den Kugelabschnitt 16 umfassenden Lagerring 22 zusammensetzt.

Das Gelenkteil 14 weist eine durchgehende Bohrung 24 auf, mittels der es mit einer Schraube an einem Radträger einer Radaufhängung eines Kraftfahrzeuges befestigbar ist. Ferner kann das zylindrische Gehäuse 12 in nicht dargestellter Weise mit einem Lenker der Radaufhängung fest verbunden sein. Das Gehäuse 12 und das Gelenkteil 14 sind in bekannter Weise aus Metall hergestellt, während der Lagerring 22 aus einem geeigneten Kunststoff, z. B. POM, gefertigt ist.

Der den Kugelabschnitt 16 umfassende Lagerring 22 ist zweiteilig mit einer senkrecht zur Gelenkmittelachse 26 verlaufenden Trennfuge 22a ausgebildet und in dem zylindrischen Gehäuse 12 sowohl umfangsseitig als auch einerseits an einem Ringbund 28 und andererseits an einem eingeschraubten Spannring 30 axial gehalten.

Zwischen den zylindrischen Abschnitten des Zapfens 18,20 und den stirnseitigen Enden des zylindrischen Gehäuses 12 sind ringförmige Abdichtungen 32 angeordnet, die das Kugelzapfgelenk 10 nach außen abdichten, ohne jedoch die erforderliche Schwenkbeweglichkeit des inneren Gelenkteiles 14 um den Kugelabschnitts-Mittelpunkt 34 zu beeinträchtigen.

Ferner sind zwischen den zylindrischen Abschnitten der Zapfen 18,20 und dem Kugelabschnitt 16 konische, den Zapfenenden zu sich verjüngende Zapfenabschnitte 18a,20a ausgebildet, die in Verbindung mit ringförmigen, ebenfalls innen konisch verlaufenden Fortsätzen 36,38 an dem Lagerring 22 Ringspalte 40,42 mit einer Länge l und einer mittleren Breite b bilden. Dabei gilt l ≥ 3 b.

Die Ringspalte 40,42 sind mit einem zähviskosen, inkompressiblen Dämpfungsfluid bzw. Öl befüllt, welches dicht zwischen den Abdichtungen 32 innerhalb des Kugelzapfgelenks 10 eingeschlossen ist und zugleich als Schmiermittel dient.

Bei einer Schwingungserregung des Kugelzapfgelenks 10 um den Kugelabschnitts-Mittelpunkt 34 verengen und verbreitern sich die Ringspalte 40,42 beiderseits des Kugelabschnitts 16 entsprechend und verdrängen dabei jeweils in Umfangsrichtung das Dämpfungsfluid, woraus eine definierte Dämpfungsfunktion resultiert. Die Dämpfungseigenschaften können dabei durch die Konfiguration der Ringspalte 40,42 und durch die Gestaltung der ringförmigen Abdichtungen 32 entsprechend bestimmt werden.

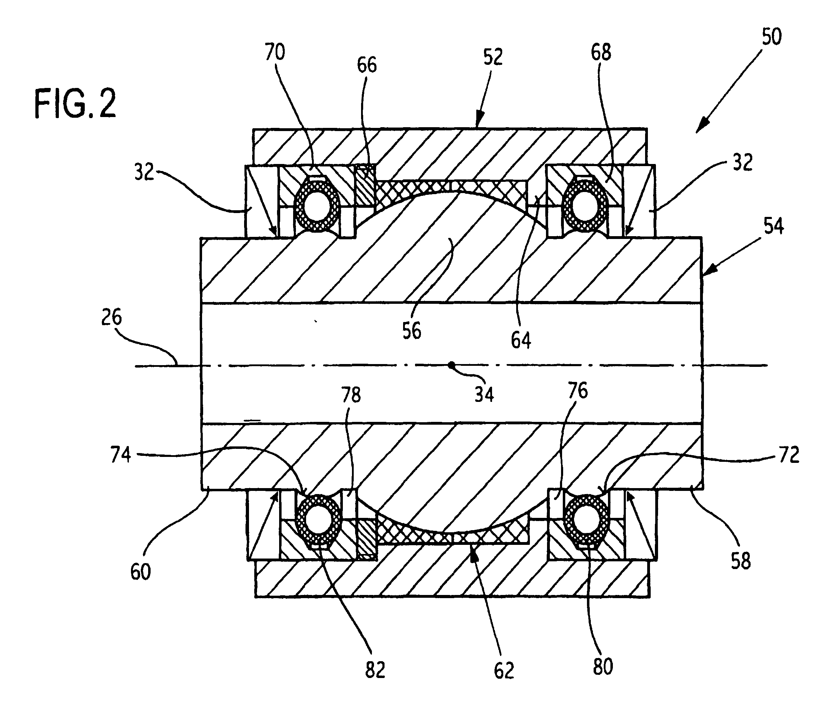

Das Kugelzapfgelenk 50 gemäß Fig. 2 ist zur Vermeidung von Wiederholungen nur so weit beschrieben, als es sich wesentlich von dem Kugelzapfgelenk 10 gemäß Fig. 1 unterscheidet. Funktionell gleiche Teile sind mit gleichen Bezugszeichen versehen.

Das Kugelzapfgelenk 50 weist wiederum ein zylindrisches äußeres Gehäuse 52, ein inneres Gelenkteil 54 mit einem Kugelabschnitt 56 und daran anschließenden Zapfen 58,60 auf.

Der dem Kugelabschnitt 56 umschließende Lagerring 62 ist axial einerseits an einem Ringbund 64 des Gehäuses 52 und andererseits an einem eingeschraubten Spannring 66 gehalten.

Daran anschließend ist je ein im Querschnitt prismarförmiger Führungsring 68,70 in dem Gehäuse 52 befestigt (eingepresst bzw. eingeschraubt).

Den Führungsringen 68,70 radial gegenüberliegend sind an die Zapfen 58,60 sphärische Ringbunde 72,74 angeformt.

In den zwischen den Führungsringen 68,70 und den Zapfen 58,60 mit ihren Ringbunden 72,74 ausgebildeten Ringspalten 76,78 sind gewebeverstärkte, gummielastische Schläuche 80,82 angeordnet, die mit einem zähviskosen Dämpfungsfluid befüllt sind.

Die Schläuche 80,82 sind dabei über etwa ihren halben Umfang in den prismarförmigen Führungsringen 68,70 aufgenommen und liegen andererseits an den sphärisch ausgebildeten Ringbunden 72,74 der Zapfen 58,60 an.

Die Ringspalte 76,80 sind wiederum mit den ringförmigen Abdichtungen 32 nach außen abgedichtet.

Die Dämpfungseigenschaften des Kugelzapfgelenks 50 bestimmen sich hier vornehmlich nach der Konfiguration der Schläuche 80,82, der Führungsringe 68,70, der Zapfen 58,60 mit oder ohne den Ringbunden 72,74 und schließlich den Abdichtungen 32. Schmiermittel und Dämpfungsmedium sind voneinander getrennt definierbar und einsetzbar.

Wird ein Dämpfungsfluid mit elektrorheologischer Eigenschaft eingesetzt, so macht sich der Einsatz einer elektrischen Isolationsschicht in der Bohrung (24) des Gelenkteils (14,54) erforderlich. Ebenso ist das zylindrische Gehäuse (12,52) von einer elektrischen Isolationsschicht zu umgeben. Die Isolationsschicht kann beispielsweise aus einem elektrisch isolierenden Material (z. B. Kunststoff) gebildet sein. Dies ist notwendig, um bei Anlegen einer elektrischen Steuerspannung an das elektrorheologische Fluid einen Kurzschluss zu vermeiden. Die elektrische Steuerspannung wird von einer Steuereinrichtung bereitgestellt.

Beim Einsatz eines magnetorheologischen Fluids könnte auf die elektrische Isolationsschicht verzichtet werden. Es wird über eine externe Spannungsversorgung an einer elektrischen Spule im Gelenkteil (14,54) oder im zylindrischen Gehäuse (12,52) ein magnetisches Feld in den von Dämpfungsfluid durchströmten Hohlräumen erzeugt, welches die Steuerung der Dämpfungscharakteristik des Kugelzapfgelenkes erlaubt.

## Patentansprüche

1. Kugelzapfgelenk (10; 50), insbesondere für Radaufhängungen von Kraftfahrzeugen, mit einem äußeren, im wesentlichen zylindrischen Gehäuse (12; 52), einem inneren Gelenkteil (14; 54) mit einem einen Kugelabschnitt (16; 54) tragenden Zapfen (18,20; 58,60) und einem den Kugelabschnitt (16; 56) umfassenden Lagerring (22; 62), der in dem zylindrischen Gehäuse (12) gehalten ist, sowie mit ringförmigen Abdichtungen (32) beiderseits der Zapfenenden, **dadurch gekennzeichnet, dass** um die Zapfen (18,20; 58,60) benachbart dem Kugelabschnitt (16; 56) Ringspalte (40,42; 76,78) ausgebildet sind, die mit einem Dämpfungsfluid mittel- oder unmittelbar befüllt sind.

2. Kugelzapfgelenk nach Anspruch 1, **dadurch gekennzeichnet, dass** die Ringspalte (40,42) im wesentlichen durch ringförmige Fortsätze (36,38) an dem Lagerring (22) begrenzt sind.

3. Kugelzapfgelenk nach Anspruch 1 oder 2, **dadurch gekennzeichnet, dass** die Ringspalte (40,42) im Querschnitt gesehen eine Länge (l) von zumindest deren dreifacher mittlerer Breite (b) aufweisen (l ≥ 3 b).

4. Kugelzapfgelenk nach den Ansprüchen 1 bis 3, **dadurch gekennzeichnet, dass** die die Ringspalte (40,42) begrenzenden Zapfenabschnitte (18a, 20a) und die Fortsätze (36,38) konisch mit zu den Zapfenenden abnehmenden Durchmessern ausgebildet sind.

5. Kugelzapfgelenk nach einem oder mehreren der vorhergehenden Ansprüche, **dadurch gekennzeichnet, dass** in den Ringspalten (76,78) mit Dämpfungsfluid befüllte, ringförmige Schläuche (80,82) angeordnet sind.

6. Kugelzapfgelenk nach Anspruch 5, **dadurch gekennzeichnet, dass** die ringförmigen Schläuche (80,82) in im Querschnitt prismarförmigen Führungsringen (68,70) des zylindrischen Gehäuses (52) gehalten sind.

7. Kugelzapfgelenk nach Anspruch 5 oder 6, **dadurch gekennzeichnet, dass** an die Zapfen (58,60) im Bereich der Schläuche (80,82) sphärisch ausgebildete Ringbunde (72,74) angeformt sind.

8. Kugelzapfgelenk nach einem oder mehreren der vorhergehenden Ansprüche, **dadurch gekennzeichnet, dass** das Dämpfungsfluid **elektrorheologische** Eigenschaften besitzt.

9. Kugelzapfgelenk nach Anspruch 8, **dadurch gekennzeichnet, dass** über eine Steuereinrichtung mit externer Spannungsversorgung an dem Gelenkteil (15,54) und dem zylindrischen Gehäuse (12,52) ein elektrisches Feld in den vom Dämpfungsfluid durchströmten Hohlräumen erzeugt wird, welches die Steuerung der Dämpfungscharakteristik des Kugelzapfgelenkes erlaubt.

10. Kugelzapfgelenk nach Anspruch 8 und 9, **dadurch gekennzeichnet, dass** in die Bohrung (24) des Gelenkteils (14,54) ein Isolationsring aus elektrisch isolierendem Material (z. B. Kunststoff) eingebracht ist und dass das zylindrische Gehäuse (12,52) von einem elektrisch isolierenden Ring umgeben ist, um einen Spannungsausgleich über elektrischen Kurzschluss zu verhindern.

11. Kugelzapfgelenk nach einem oder mehreren der vorhergehenden Ansprüche 1 bis 7, **dadurch gekennzeichnet, dass** das Dämpfungsfluid **magnetorheologische** Eigenschaften besitzt.

12. Kugelzapfgelenk nach Anspruch 11, **dadurch gekennzeichnet, dass** über eine externe Spannungsversorgung an einer elektrischen Spule im Gelenkteil (14,54) oder im zylindrisches Gehäuse (12,52) ein magnetisches Feld in den vom Dämfpungsfluid durchströmten Hohlräumen erzeugt wrid, welches die Steuerung der Dämpfungscharakteristik des Kugelzapfgelenkes erlaubt.

## Claims

1. Ball and socket joint (10; 50) for wheel-hanging systems in vehicles with an outer, essentially cylindrical housing (12; 52), an inner link (14; 54) with a journal (18, 20; 58, 60) and a ring bearing (22; 62) which surrounds the ball section (16; 56) and which is held in the cylindrical housing (12), and with annular seals (32) on both sides of the ends of the journals, **characterized in that** annular clearances (40, 42; 76, 78), which are directly or indirectly filled with a damping fluid, are, adjacent to the ball section (16; 56), developed around the journals (18, 20; 58, 60).

2. Ball and socket joint in accordance with claim 1, **characterized in that** the annular clearances (40, 42) are substantially bordered by annular projections (36, 38) on the ring bearing (22).

3. Ball and socket joint in accordance with claims 1 or 2, **characterized in that** the annular clearances (40, 42) have, seen in cross-section, a length (l) that is at least three times the average width (b) (l ≥ 3b).

4. Ball and socket joint in accordance with claims 1 to 3, **characterized in that** the journal sections (18a, 20a) and the projections (36, 38) adjoining the annular clearances are conical with diameters declining towards the journal ends.

5. Ball and socket joint in accordance with one of the preceding claims, **characterized in that** annular tubes (80, 82), filled with damping fluid, are arranged in the annular clearances (76, 78).

6. Ball and socket joint in accordance with claim 5, **characterized in that** the annular tubes (80, 82) are held in guiding rings (68, 70), which are prism-shaped, of the cylindrical housing (52).

7. Ball and socket joint in accordance with claims 5 or 6, **characterized in that** spherical collars (72, 74) are formed on the journals (58, 60) in the area of the tubes (80, 82).

8. Ball and socket joint in accordance with one or several of the above, **characterized in that** the damping fluid has electro-rheological qualities.

9. Ball and socket joint in accordance with claim 8, **characterized in that** an electrical field, enabling control of the damping characteristics of the ball and socket joint, is produced, by means of a control device with an external voltage supply to the pivoting part (15, 54) and to the cylindrical housing (12, 52), in the cavities through which the damping fluid flows.

10. Ball and socket joint in accordance with claims 8 and 9, **characterized in that** an insulation ring made of electrically insulating material (plastic for example) is inserted into the boring (24) of the pivoting part (14, 54) and **in that** the cylindrical housing (12, 52) is surrounded by an electrically insulating ring, in order to prevent an equalization of voltage via an electrical short-circuit.

11. Ball and socket joint in accordance with one or more of the preceding claims 1 to 7, **characterized in that** the damping fluid has magneto-rheological properties.

12. Ball and socket joint in accordance with claim 11, **characterized in that** a magnetic field, enabling control of the damping characteristics of the ball and socket joint, is produced, by means of a control device with an external voltage supply to an electrical coil in the pivoting part (14, 54) or in the cylindrical housing (12, 52), in the cavities through which the damping fluid flows.

## Revendications

1. Articulation à rotule (10 ; 50), en particulier pour des suspensions de roue de véhicules à moteur, comportant un carter extérieur (12 ; 52) essentiellement cylindrique, une partie d'articulation intérieure (14 ; 54) ayant un pivot (18, 20 ; 58, 60) portant une section sphérique (16 ; 56) et une bague de roulement (22 ; 62), entourant la section sphérique (16 ; 56), bague de roulement qui est maintenue dans le carter cylindrique (12), ainsi que des étanchéités annulaires (32) des deux côtés des extrémités du pivot, **caractérisée en ce qu'**autour des pivots (18, 20 ; 58, 60), au voisinage de la section sphérique (16 ; 56), sont constituées des fentes annulaires (40, 42 ; 76, 78), qui sont directement ou indirectement remplies d'un fluide d'amortissement.

2. Articulation à rotule selon la revendication 1, **caractérisée en ce que** les fentes annulaires (40, 42) sont pour l'essentiel délimitées par des prolongements annulaires (36, 38) contre la bague de roulement (22).

3. Articulation à rotule selon la revendication 1 ou 2, **caractérisée en ce que** les fentes annulaires (40, 42) ont, en section transversale, une longueur (l) qui est au moins le triple de leur largeur moyenne (b) (l ≥ 3b).

4. Articulation à rotule selon les revendications 1 à 3, **caractérisée en ce que** les sections de pivot (18a, 20a) délimitant les fentes annulaires (40, 42), et les prolongements (36, 38), sont réalisées selon une forme conique, avec des diamètres qui diminuent vers les extrémités du pivot.

5. Articulation à rotule selon l'une ou plusieurs des revendications précédentes, **caractérisée en ce que** des tuyaux flexibles (80, 82) annulaires et remplis d'un fluide d'amortissement sont disposés dans les fentes annulaires (76, 78).

6. Articulation à rotule selon la revendication 5, **caractérisée en ce que** les tuyaux flexibles annulaires (80, 82) sont maintenus dans des bagues de guidage (68, 70), ayant une section transversale prismatique, du carter cylindrique (52).

7. Articulation à rotule selon la revendication 5 ou 6, **caractérisée en ce que** des collerettes annulaires (72, 74) de forme sphérique sont rapportées aux pivots (58, 60) dans la zone des tuyaux flexibles (80, 82).

8. Articulation à rotule selon l'une ou plusieurs des revendications précédentes, **caractérisée en ce que** le fluide d'amortissement possède des propriétés électro-rhéologiques.

9. Articulation à rotule selon la revendication 8, **caractérisée en ce que**, par l'intermédiaire d'un dispositif de commande comportant une alimentation externe en courant sur la partie d'articulation (15, 54) et le carter cylindrique (12, 52), un champ électrique est produit dans les cavités traversées par le fluide d'amortissement, champ électrique qui permet de commander la caractéristique d'amortissement de l'articulation à rotule.

10. Articulation à rotule selon les revendications 8 et 9, **caractérisée en ce qu'**une bague d'isolation en un matériau isolant électrique (par exemple une matière plastique) est insérée dans le trou (24) aménagé dans la partie d'articulation (14, 54), et **en ce que** le carter cylindrique (12, 52) est entouré d'une bague isolante électrique, pour empêcher une égalisation de potentiel sous l'effet d'un court-circuit électrique.

11. Articulation à rotule selon l'une ou plusieurs des revendications précédentes 1 à 7, **caractérisée en ce que** le fluide d'amortissement possède des propriétés magnéto-rhétologiques.

12. Articulation à rotule selon la revendication 11, **caractérisée en ce que**, par l'intermédiaire d'une alimentation externe en courant à une bobine électrique dans la partie d'articulation (14, 54) ou dans le carter cylindrique (12, 52), un champ magnétique est produit dans les cavités traversées par le fluide d'amortissement, champ magnétique qui permet la commande de la caractéristique d'amortissement de l'articulation à rotule.
